# EUROPEAN PATENT APPLICATION

(11) **EP 4 694 277 A1**
(43) Date of publication of application: **11.02.2026**
(21) Application number: 23929042.2
(22) Date of filing: 24.03.2023
(51) Int. Cl.: H04W 24/02

(54) **SENSING REQUEST METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); WANG, Yaxin, Dongguan, Guangdong 523860 (CN)
(74) Representative: Novagraaf Technologies
(86) International application number: PCT/CN2023/083601
(87) International publication number: WO 2024/197438

(57) **Abstract**

The present application relates to the technical field of communications. Disclosed are a sensing request method and apparatus, and a device and a storage medium. The method is executed by a first network element used for sensing a service. The method comprises: receiving a sensing request, wherein the sensing request at least carries object features of a target object, and the sensing request is used for making a request to carry out sensing on the target object.

## Description

### TECHNICAL FIELD

The present disclosure relates to the field of communication technologies, and in particular, relates to a sensing request method and apparatus, and a device and storage medium thereof.

### RELATED ART

Cellular networks are typically used for wireless data transmission and communication. Wireless electromagnetic wave signals used in the cellular network also have environmental sensing capabilities, such as gesture recognition, respiration monitoring, and terminal movement speed detection. Therefore, in future cellular networks, acquisition of sensing information may also be considered.

In related research, sensing a specific target object is not supported. Such a specific target object refers to an entity distinct from a terminal device and may not be bound to a terminal device in a mobile network, such as livestock, a stone, and a ball.

### SUMMARY

Embodiments of the present disclosure provide a sensing request method and apparatus, and a device and storage medium thereof. By carrying object features of a target object in a sensing request, a request is made to sense a target object that is not a terminal device. The technical solutions are as follows.

Some embodiments of the present disclosure provide a sensing request method performed by a first network element for a sensing service. The method includes: receiving a sensing request, wherein the sensing request carries at least an object feature of a target object, and the sensing request is used to request sensing of the target object.

Some embodiments of the present disclosure provide a sensing request method performed by a terminal or an application function (AF). The method includes: send a sensing request, wherein the sensing request carries at least an object feature of a target object, and the sensing request is used to request sensing of the target object.

Some embodiments of the present disclosure provide a sensing request method performed by a first node for a sensing service. The method includes: receiving a sensing instruction, wherein the sensing instruction is sent by a first network element for the sensing service in response to a sensing request, and the sensing request is used to request sensing of a target object.

Some embodiments of the present disclosure provide a sensing request apparatus. The apparatus includes: a receiving module configured to receive a sensing request, wherein the sensing request carries at least an object feature of a target object, and the sensing request is used to request sensing of the target object.

Some embodiments of the present disclosure provide a sensing request apparatus. The apparatus includes: a sending module configured to send a sensing request, wherein the sensing request carries at least an object feature of a target object, and the sensing request is used to request sensing of the target object.

Some embodiments of the present disclosure provide a sensing request apparatus. The apparatus includes: a receiving module configured to receive a sensing instruction, wherein the sensing instruction is sent by a first network element for a sensing service in response to a sensing request, and the sensing request is used to request sensing of a target object.

Some embodiments of the present disclosure provide a first network element for a sensing service. The first network element is configured to perform the sensing request method as described above.

Some embodiments of the present disclosure provide a terminal. The terminal is configured to perform the sensing request method as described above.

Some embodiments of the present disclosure provide an AF. The AF is configured to perform the sensing request method as described above.

Some embodiments of the present disclosure provide a first node for a sensing service. The first node is configured to perform the sensing request method as described above.

Some embodiments of the present disclosure provide a computer-readable storage medium storing a computer program. The computer program is configured to be executed by a processor to cause the processor to perform the sensing request method as described above.

Some embodiments of the present disclosure provide a chip including a programmable logic circuit and/or a program instruction. When an electronic device equipped with the chip operates, the electronic device is configured to perform the sensing request method as described above.

Some embodiments of the present disclosure provide a computer program product including a computer instruction stored in a computer-readable storage medium. A processor reads the computer instruction from the computer-readable storage medium and executes the computer instruction to perform the sensing request method as described above.

The technical solutions according to the embodiments of the present disclosure have at least the following beneficial effects.

By carrying the object features of a target object in a sensing request, a first network element for a sensing service is requested to sense a target object that is not a terminal device.

### BRIEF DESCRIPTION OF DRAWINGS

For clear descriptions of the technical solutions according to the embodiments of the present disclosure, the drawings required for describing the embodiments are briefly described hereinafter. It is obvious that the drawings in the following descriptions are merely for illustrating some exemplary embodiments of the present disclosure, and those of ordinary skill in the art may derive other drawings based on these drawings without any creative efforts.
FIG. 1 is a schematic diagram of a 5G network architecture according to some embodiments of the present disclosure;
FIG. 2 is a schematic diagram of another 5G network architecture according to some embodiments of the present disclosure;
FIG. 3 is a flowchart of a sensing request method according to some embodiments of the present disclosure;
FIG. 4 is a flowchart of a sensing request method according to some embodiments of the present disclosure;
FIG. 5 is a flowchart of a sensing request method according to some embodiments of the present disclosure;
FIG. 6 is a flowchart of a sensing request method according to some embodiments of the present disclosure;
FIG. 7 is a flowchart of a sensing request method according to some embodiments of the present disclosure;
FIG. 8 is a flowchart of a sensing request method according to some embodiments of the present disclosure;
FIG. 9 is a flowchart of a sensing request method according to some embodiments of the present disclosure;
FIG. 10 is a schematic diagram of a sensing request apparatus according to some embodiments of the present disclosure;
FIG. 11 is a schematic diagram of a sensing request apparatus according to some embodiments of the present disclosure;
FIG. 12 is a schematic diagram of a sensing request apparatus according to some embodiments of the present disclosure; and
FIG. 13 is a schematic structural diagram of a communication device according to some embodiments of the present disclosure.

### DETAILED DESCRIPTION

For clearer descriptions of the objectives, technical solutions, and advantages of the present disclosure, some embodiments of the present disclosure are described in detail with reference to the drawings.

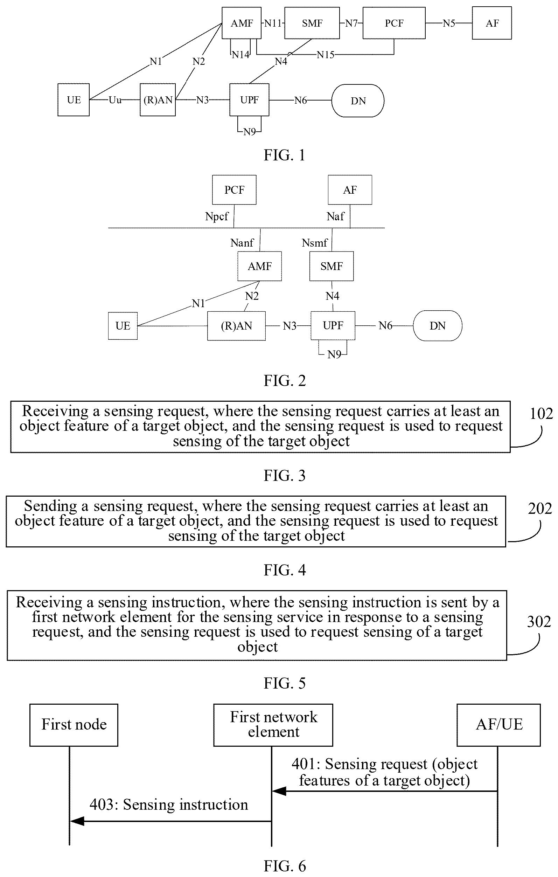

Referring to FIGS. 1 and 2, the network system architecture in a 5th Generation (5G) communication system involves a user equipment (UE), a (radio) access network ((R)AN), a user plane function (UPF), a data network (DN), and control plane functions.

FIG. 1 shows that network elements of a core network are connected in pairs via predefined interfaces. FIG. 2 shows that the network elements of the core network interact with each other by invoking services provided by the network elements. It should be understood that the present disclosure does not limit whether the network elements use an interface-based approach or a service invocation mode.

The control plane functions include: an access and mobility management function (AMF), a session management function (SMF), a policy control function (PCF), a unified data manager (UDM), an application function (AF), a network slice selection function (NSSF), and an authentication server function (AUSF).

The UE (also referred to as a terminal or terminal device) establishes an access layer connection with the AN via a Uu air interface to interact with access layer messages and perform wireless data transmission. The UE establishes a non-access stratum (NAS) connection with the AMF via an N1 interface for exchange of NAS messages. The AMF implements a mobility management function in the core network. The SMF implements a session management function in the core network. In addition to performing mobility management for the UE, the AMF is responsible for forwarding session management-related messages between the UE and the SMF. The PCF implements a policy management function in the core network, and is responsible for formulating policies related to mobility management, session management, charging, and the like, for the UE. The UPF implements a user plane function in the core network, and performs data transmission with an external data network via an N6 interface and data transmission with the AN via an N3 interface.

In an example, cellular networks, such as 5G networks, are only used for communication. In some embodiments, the wireless electromagnetic wave signals used by the cellular networks can not only be used for wireless data transmission and communication but also have environmental sensing capabilities. For example, the cellular networks may be used to acquire actions of users, and perform gesture recognition, respiration monitoring, terminal movement speed measurement, environmental imaging, weather monitoring, and the like. Therefore, future cellular networks may be considered not only for communication and data transmission but also for acquisition of sensing information.

Currently, the support for sensing capabilities in Beyond 5G (B5G) networks is under discussion. In an example, the support for sensing functions is provided by adding a first network element configured for the sensing service with corresponding procedures. The first network element may be implemented as a sensing function (SF), and the first network element may also be referred to as a sensing function network element or a sensing control network element. The following uses SF to describe the first network element.

When sensing capabilities are added to the communication capabilities supported by the mobile network, the mobile network can perform sensing on the environment within an area, such as through environmental imaging and weather monitoring. The mobile network can also perform sensing on a specific UE, such as through movement data and movement trajectories of the UE. Alternatively, the mobile network can perform sensing on a user operating a specific UE, such as through the respiration frequency and heartbeat monitoring of the user operating the specific UE. In the above examples, it may be understood that the user operating the UE is bound to the UE.

In related research, the capabilities to sense a specific target object are not yet supported. The target object mentioned herein refers to an entity distinct from a UE and may not be bound to a UE in a mobile network, such as livestock, a stone, and a ball.

Some embodiments of the present disclosure provide a sensing request method that enables a first network element for a sensing service to sense a target object, thereby implementing the sensing service. The target object is an entity that is distinct from a UE and may not be bound to a UE in a mobile network as described above.

It should be understood that any network element used to implement the sensing service may be regarded as the first network element mentioned in the present disclosure. In some implementation scenarios, the first network element may be represented as an SF, a sensing function network element, a sensing control network element, or the like. In the following embodiments, the first network element is represented as the SF, and other similar descriptions are not elaborated herein.

First, a UE or AF sends a sensing request to a first network element for a sensing service, with the object feature(s) of a target object carried in the sensing request. It may also be understood that the target object is described in the sensing request. In some embodiments, the object feature is used to describe a physical characteristic and/or a movement characteristic of the target object, such as a size, shape, color, temperature, trajectory of movement, and interval of speed of movement of the target object.

Based on the sensing request, the first network element sends a sensing instruction to a first node for the sensing service to instruct sensing of the target object. Similar to the first network element, the first node may also be referred to as a sensing node, a sensing function node, or a sensing control node, and other similar descriptions are not elaborated herein.

**In some embodiments,** the sensing instruction may be implemented as a first sensing instruction for instructing the first node to sense the target object.

The first sensing instruction carries an object feature of the target object, such that the first node is capable of identifying the target object and acquiring sensing data of the target object. Subsequently, the first node may report the sensing data of the target object to a second network element, which is configured to acquire sensing data. In some embodiments, the second network element may be the first network element or a network element in the core network other than the first network element, such as a network element configured to acquire sensing data, which may be referred to as a sensing data acquisition network element.

In some embodiments, when the target object is moving, the first node may send a new sensing instruction to a second node for the sensing service, such that the second node senses the target object. In this case, the sensing instruction may carry the object feature of the target object, a sensing type for the target object, first network element information of the first network element, and second network element information of the second network element.

**In some other embodiments,** the sensing instruction may be implemented as a second sensing instruction for instructing the first node to perform wireless signal measurement with the target object.

The second sensing instruction carries a wireless measurement requirement to facilitate wireless signal measurement by the first node with the target object. Subsequently, the first node reports a wireless signal measurement result to the second network element, and the second network element identifies the target object based on the wireless signal measurement result to determine a sensing result of the target object. Similar to the above embodiments, the second network element may be the first network element or a network element in the core network other than the first network element.

In these embodiments, subsequent to acquiring the sensing data or movement information of the target object, the first network element may determine a new sensing node based on the acquired sensing data or movement information, to perform a new sensing service; or the first network element may adjust, based on the acquired sensing data or movement information, the sensing instruction sent to the first node.

For example, the sensing request method according to the embodiments of the present disclosure is not limited to be used in a 5G network but may also be used in a future mobile network, such as a B5G and a 5^{th} Generation (6G) communication network.

The sensing request method is described in detail hereinafter.

FIG. 3 shows a flowchart of a sensing request method according to some embodiments of the present disclosure. The method is performed by a first network element for a sensing service and includes the following step.

In **step 102,** the first network element receives a sensing request.

In an example, the sensing request carries at least an object feature of a target object, and the sensing request is used to request sensing of the target object.

It may be understood that the sensing request is used to describe the target object, or that the target object in the sensing request is described based on the object feature. In some embodiments, the object feature is used to describe a physical characteristic and/or a movement characteristic of the target object.

The physical characteristic of the target object may include a size, shape, color, temperature, material of the object, and the like. The movement characteristic of the target object may be understood as a characteristic related to the movement of the target object, such as a trajectory of movement and speed of movement.

In some embodiments, the object feature includes, but is not limited to, at least one of: a size of the target object, a shape of the target object, a color of the target object, a temperature of the target object, a material of the target object, a volume of the target object, a weight of the target object, a form of the target object, a trajectory of movement of the target object, a speed of movement of the target object, an interval of speed of movement of the target object, a state of movement of the target object, a start position of movement of the target object, or an end position of movement of the target object.

The material of the target object is used to indicate a material of the outer surface of the target object, such as metal or plastic. The form of the target object includes three states: solid, liquid, and gas. The state of movement of the target object exemplarily includes one of: uniform movement, accelerated movement, or decelerated movement. The start position of movement of the target object may be understood as the position of a start point of movement of the target object. The end position of movement of the target object may be understood as the position of an end point of movement of the target object.

It should be understood that the size, shape, color, temperature, material, volume, weight, and form of the target object belong to the physical characteristic of the target object; and the trajectory of movement, speed of movement, interval of speed of movement, state of movement, start position of movement, and end position of movement of the target object belong to the movement characteristic of the target object.

The above description merely provides illustrative examples of the object feature of the target object and does not limit the present disclosure. Other information used for describing the physical characteristic and/or movement characteristic of the object belongs to the object feature of the target object involved in the present disclosure, which is not elaborated herein.

In some embodiments, for further description of the target object, the sensing request may also carry at least one of the following information items.
- Location information of the target object
   The location information of the target object is used to describe the location of the target object. In some embodiments, the location information of the target object includes at least one of: a geographical location of the target object, information of an area corresponding to the target object, or information of a direction corresponding to the target object. For example, the location information of the target object is the geographic coordinates of the area where the target object is currently located.
- Terminal information associated with the target object
- Access network device information associated with the target object
   The terminal information and/or access network device information associated with the target object are used to indicate association information of one or more devices near the target object that perform wireless communication, such as identification information of one or more UEs near the target object.
- Sensing type for the target object

The sensing type may also be referred to as a sensing data type, such as received signals or raw channel information (e.g., complex-valued results, amplitudes/phases, and in-phase (I) data/quadrature (Q) data of received signals or channel responses, and related operation results thereof).

In some embodiments, the sensing type includes at least one of: a sensing basic measurement quantity, a basic attribute of the target object, a basic state of the target object, or a sensing result. In some embodiments, the sensing basic measurement quantity includes at least one of: delay, Doppler shift, angle, intensity, or a multi-dimensional combination of the above measurement quantities (e.g., point cloud information, a delay-Doppler matrix, or the like). In an example, the basic attribute and/or basic state of the target object may be distance, speed, orientation, or acceleration. The sensing result is used to indicate a final result acquired upon sensing, such as a spatial location of the target object, a trajectory of the target object, an action of the target object, an expression of the target object, a vital sign of the target object, a quantity of the target object, an imaging result of the target object, a shape of the target object, and composition of the target object.

Referring to the above description, the first network element may be an SF.

In some embodiments, the first network element is an independent network element in the core network, or the first network element is any one of: a network exposure function (NEF), an SMF, or an AMF in the core network. That is, the SF may be a newly established independent network element in the core network, or reuse an existing network element, such as by adding sensing functions to the NEF/SMF/AMF.

In some embodiments, the sensing request is sent by a terminal or an AF. In some other embodiments, the sensing request is sent by a terminal or an AF via another network element. For example, the AF sends the sensing request to the first network element via the NEF. For another example, the UE sends the sensing request to the first network element via the AMF and/or SMF.

Subsequent to receiving the sensing request, the first network element may determine one or more sensing nodes. In some embodiments, the sensing request method according to the embodiments of the present disclosure further includes: determining a first node for the sensing service, where the first node is determined based on the sensing request. That is, the first network element may determine one or more sensing nodes (i.e., first nodes) for the sensing service based on the sensing request. For example, subsequent to acquiring the sensing request, the first network element may determine the first node based on the area where the target object carried in the sensing request is currently located, the UEs near the target object, or the capabilities of sensing nodes in the area.

In some embodiments, the first node includes one of: an access network device, a terminal, or a server for the sensing service. The access network device and the terminal may also be referred to as sensing devices. The server for the sensing service may also be referred to as a sensing application server. In some embodiments, the first node further includes traditional sensing devices, such as cameras.

Subsequent to determining the first node, the first network element may send a sensing instruction to the first node to instruct sensing of the sensing service. In some embodiments, the sensing instruction includes one of the following instructions.
- A first sensing instruction for instructing the first node to sense the target object

The first sensing instruction carries at least the object feature of the target object, such that the first node is capable of identifying the target object and acquiring the sensing data of the target object. In some embodiments, the first sensing instruction further carries the sensing type for the target object.

Subsequently, the first node may report the sensing data of the target object to a second network element, which is configured to acquire sensing data. In an example, the second network element may be implemented as the first network element. In this case, the first node sends the sensing data of the target object to the first network element.

In some embodiments, the sensing data includes sensing measurement data and/or a sensing result. The sensing measurement data may be a wireless signal measurement quantity. The sensing result may be information generated by calculation and/or analysis.
- A second sensing instruction for instructing the first node to perform wireless signal measurement with the target object

The second sensing instruction carries a wireless measurement requirement to facilitate wireless signal measurement by the first node with the target object. It may also be understood that the second sensing instruction includes the wireless measurement requirement required to be performed by the first node.

Subsequently, the first node may report a wireless signal measurement result to the second network element to facilitate the second network element in identifying the target object. In some examples, the second network element may be implemented as the first network element. In this case, the sensing request method according to the embodiments of the present disclosure further includes: receiving the wireless signal measurement result from the first node; and identifying the target object based on the wireless signal measurement result.

Furthermore, the sensing request method according to the embodiments of the present disclosure also includes: determining sensing data of the target object based on the wireless signal measurement result. In some embodiments, the sensing data includes at least one of: sensing measurement data, or a sensing result.

In some embodiments, in a case where the target object is in a moving state, the sensing request method according to the embodiments of the present disclosure further includes: determining a new first node based on the sensing data or movement information of the target object; or adjusting, based on the sensing data or movement information of the target object, the sensing instruction sent to the first node.

That is, subsequent to acquiring the sensing data or movement information of the target object, the first network element may determine a new sensing node based on the sensing data or movement information to perform a new sensing service, or the first network element may adjust, based on the sensing data or movement information, the sensing instruction sent to the first node.

For example, in a case where the sensing instruction is a first sensing instruction, when the target object is moving, the first node may send a new sensing instruction to a second node for the sensing service, such that the second node is capable of sensing the target object. The new sensing instruction may carry the object feature of the target object, the sensing type for the target object, the first network element information of the first network element, and the second network element information of the second network element.

In summary, in the sensing request method according to the embodiments of the present disclosure, the first network element for the sensing service is requested to sense a target object that is not a terminal device by carrying the object feature of the target object in the sensing request.

FIG. 4 shows a flowchart of a sensing request method according to some embodiments of the present disclosure. The method is performed by a UE/AF and includes the following step.

In **step 202,** the UE/AF sends a sensing request.

In an example, the sensing request carries at least an object feature of a target object, and the sensing request is used to request sensing of the target object.

In some embodiments, the object feature is used to describe a physical characteristic and/or a movement characteristic of the target object.

In some embodiments, the object feature includes, but is not limited to, at least one of: a size of the target object, a shape of the target object, a color of the target object, a temperature of the target object, a material of the target object, a volume of the target object, a weight of the target object, a form of the target object, a trajectory of movement of the target object, a speed of movement of the target object, an interval of speed of movement of the target object, a state of movement of the target object, a start position of movement of the target object, or an end position of movement of the target object.

It should be understood that the size, shape, color, temperature, material, volume, weight, and form of the target object belong to the physical characteristic of the target object; and the trajectory of movement, speed of movement, interval of speed of movement, state of movement, start position of movement, and end position of movement of the target object belong to the movement characteristic of the target object.

Described above are merely some illustrative examples of the object feature of the target object and do not limit the present disclosure. Other information used for describing the physical characteristic and/or movement characteristic of the object belongs to the object feature of the target object involved in the present disclosure, which is not elaborated herein.

In some embodiments, for further description of the target object, the sensing request may also carry at least one of: location information of the target object, terminal information associated with the target object, access network device information associated with the target object, or sensing type for the target object.

For the related descriptions of the information, reference may be made to the above content, which are not elaborated herein.

In some embodiments, the sensing request is directly sent by a terminal or an AF. In some other embodiments, the sensing request is sent by a terminal or an AF via another network element. Based on this, step 202 may be implemented as follows: sending the sensing request to the first network element for the sensing service; or sending the sensing request to the first network element via a network element other than the first network element.

The first network element is an independent network element in the core network. Alternatively, the first network element is any one of an NEF, an SMF, or an AMF in the core network. In some embodiments, the AF may send the sensing request to the first network element via the NEF. In some other embodiments, the UE may send the sensing request to the first network element via the AMF and/or SMF.

In summary, the sensing request method according to the embodiments of the present disclosure requests the first network element for the sensing service to sense a target object that is not a terminal device by carrying the object feature of the target object in the sensing request.

FIG. 5 shows a flowchart of a sensing request method according to an exemplary embodiment of the present disclosure. The method is performed by a first node for a sensing service and includes the following step.

In **step 302,** the first node receives a sensing instruction.

In an example, the sensing instruction is sent by a first network element for the sensing service in response to a sensing request, and the sensing request is used to request sensing of a target object. It should be understood that the sensing request carries at least an object feature of the target object.

For the related description of the sensing request, reference may be made to the above content, which is not elaborated herein.

As described above, the first network element may determine one or more sensing nodes (i.e., first nodes) based on the sensing request, and then send a sensing instruction to the first node. In some embodiments, the first node includes one of: an access network device, a terminal, or a server for the sensing service. The access network device and the terminal may also be referred to as sensing devices. The server for the sensing service may also be referred to as a sensing application server. In some embodiments, the first node further includes traditional sensing devices, such as cameras.

In some embodiments, the sensing instruction includes one of the following instructions.
- A first sensing instruction for instructing the first node to sense the target object
- A second sensing instruction for instructing the first node to perform wireless signal measurement with the target object

In some embodiments, subsequent to receiving the first sensing instruction or the second sensing instruction, the first node performs wireless signal measurement with the target object to acquire a wireless signal measurement result.

In a case where the received instruction is a first sensing instruction, the first node feeds back the wireless signal measurement result to the first node, and the first node identifies the target object based on the wireless signal measurement result, and determines the sensing data of the target object. Subsequently, the first node feeds back the sensing data to the second network element which is configured to receive data.

In a case where the received instruction is a first sensing instruction, the first node directly feeds back the wireless signal measurement result to the second network element, which is used for the second network element to identify the target object. Subsequently, the second network element may directly identify the target object based on the wireless signal measurement result, and determine the sensing data of the target object.

In some embodiments, the sensing data includes at least one of: sensing measurement data, or a sensing result.

Due to the possibility that the target object may move, the target object may move outside the range where the first node is capable of performing wireless signal measurement. In this case, the first node may determine a second node for the sensing service based on a movement situation of the target object, and send a third sensing instruction to the second node. The third sensing instruction carries at least the object feature of the target object to facilitate the second node in identifying the target object.

In some embodiments, the third sensing instruction further carries at least one of: a sensing type for the target object, first network element information of the first network element, or second network element information of the second network element for receiving the sensing data of the target object.

The second network element includes one of: the first network element, or a network element in the core network other than the first network element. For example, the second network element includes a network element configured to acquire sensing data, which may be referred to as a sensing data acquisition network element.

In some embodiments, the second node is determined by the first node based on the movement situation of the target object. For example, subsequent to acquiring the sensing data or movement information of the target object, the first node may determine a new sensing node (i.e., second node) based on the sensing data or movement information to perform a new sensing service.

In summary, in the sensing request method according to the embodiments of the present disclosure, the first node is enabled to perform corresponding operations in response to the sensing instruction by receiving the sensing instruction sent in response to the sensing request, thereby realizing sensing of a target object that is not a terminal device.

FIG. 6 shows a flowchart of a sensing request method according to some embodiments of the present disclosure. The method includes the following steps.

In **step 401,** a UE/AF sends a sensing request to a first network element.

In an example, the sensing request carries at least an object feature of a target object, and the sensing request is used to request sensing of the target object.

In some embodiments, the object feature is used to describe a physical characteristic and/or a movement characteristic of the target object.

In some embodiments, the object feature includes, but is not limited to, at least one of: a size of the target object, a shape of the target object, a color of the target object, a temperature of the target object, a material of the target object, a volume of the target object, a weight of the target object, the form of the target object, a trajectory of movement of the target object, a speed of movement of the target object, an interval of speed of movement of the target object, a state of movement of the target object, a start position of movement of the target object, or an end position of movement of the target object.

It should be understood that the size, shape, color, temperature, material, volume, weight, and form of the target object belong to the physical characteristic of the target object; and the trajectory of movement, speed of movement, interval of speed of movement, state of movement, start position of movement, and end position of movement of the target object belong to the movement characteristic of the target object.

Described above are merely some illustrative examples of the object feature of the target object and does not limit the present disclosure. Other information used for describing the physical characteristic and/or movement characteristic of the object belongs to the object feature of the target object involved in the present disclosure, which is not elaborated herein.

In some embodiments, for further descriptions of the target object, the sensing request may also carry at least one of: location information of the target object, terminal information associated with the target object, access network device information associated with the target object, or sensing type for the target object.

For the related description of the above information, reference may be made to the above content, which is not elaborated herein.

In **step 403,** the first network element sends a sensing instruction to a first node.

In an example, the sensing instruction is sent by the first network element for the sensing service in response to a sensing request, and the sensing request is used to request sensing of the target object. It should be understood that the sensing request carries at least the object feature of the target object.

For the related description of the sensing request, reference may be made to the above content, which is not elaborated herein.

Subsequent to receiving the sensing request, the first network element may determine one or more sensing nodes (i.e., first nodes) for the sensing service. For example, subsequent to acquiring the sensing request, the first network element may determine the first node based on the area where the target object carried in the sensing request is currently located, the UE near the target object, or the capabilities of sensing nodes in the area.

In some embodiments, the sensing instruction includes one of: a first sensing instruction for instructing the first node to sense the target object; or a second sensing instruction for instructing the first node to perform wireless signal measurement with the target object.

The first sensing instruction carries at least the object feature of the target object such that the first node is capable of identifying the target object and acquiring the sensing data of the target object. The second sensing instruction carries a wireless measurement requirement to facilitate wireless signal measurement by the first node with the target object.

Subsequently, the first node may perform different operations in response to different sensing instructions. The first node may identify the target object on its own, or the identification of the target object may be performed by the second network element.

In summary, in the sensing request method according to the embodiments of the present disclosure, the first network element for the sensing service is requested to sense a target object that is not a terminal device by carrying the object feature of the target object in the sensing request.

Referring to the above description, the sensing instruction may be implemented as a first sensing instruction or a second sensing instruction. These two cases are described in detail hereinafter.

### 1. The first network element sends a first sensing instruction to the first node.

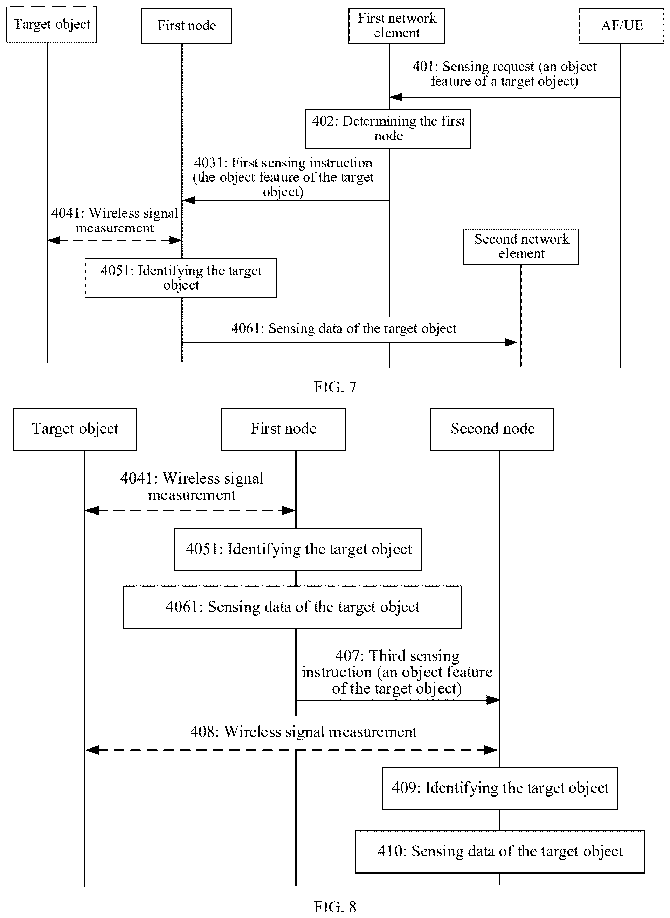

Referring to FIG. 6, FIG. 7 shows a flowchart of a sensing request method according to some embodiments of the present disclosure. In the method, step 403 may be implemented as step 4031 and includes step 402, step 4041, step 4051, and step 4061, as detailed hereinafter.

In **step 402,** the first network element determines a first node for the sensing service.

In an example, the first node is determined based on a sensing request.

In some embodiments, the first network element may determine one or more sensing nodes (i.e., first nodes) based on the sensing request. In some embodiments, the first node includes one of: an access network device, a terminal, or a server for the sensing service. The access network device and the terminal may also be referred to as sensing devices. The server for the sensing service may also be referred to as a sensing application server. In some embodiments, the first node further includes traditional sensing devices, such as cameras.

In an example, the first network element determines the first node based on the area where the target object is currently located, information of the UE near the target object, or the capabilities of sensing nodes in the area.

In **step 4031,** the first network element sends a first sensing instruction to the first node.

In an example, the first sensing instruction carries at least the object feature of the target object. The first sensing instruction is used to instruct the first node to sense the target object.

In some embodiments, the first sensing instruction further carries the sensing type for the target object. For the related description of the sensing type, reference may be made to the above content, which is not elaborated herein.

In **step 4041,** the first node performs wireless signal measurement with the target object.

In response to the first sensing instruction, the first node may initiate wireless signal measurement to perform sensing operations.

In **step 4051,** the first node identifies the target object.

In an example, the target object is determined based on the wireless signal measurement result.

In **step 4061,** the first node sends sensing data of the target object to a second network element.

Subsequent to acquiring the wireless signal measurement result, the first node may identify the target object based on this result and acquire the sensing data of the target object. Subsequently, the first node reports the sensing data of the target object to the second network element, which is configured to acquire sensing data.

The second network element may be implemented as the first network element or a network element in the core network other than the first network element, such as a sensing data acquisition network element. In some embodiments, the sensing data includes sensing measurement data and/or a sensing result. The sensing measurement data may be wireless signal measurement quantities. The sensing result may be information generated by calculation and/or analysis.

In some embodiments, in a case where the target object is in a moving state, there is a possibility that the target object moves outside the area where the first node is incapable of performing sensing operations. In this case, the node needs to be changed, such that the sensing operations are performed by a new sensing node. Alternatively, where the target object is changed, the sensing instruction sent to the first node needs to be changed accordingly. The first node may execute the sending of the sensing instruction to the new sensing node subsequent to the change.

Referring to FIG. 7, FIG. 8 shows a flowchart of a sensing request method according to some embodiments of the present disclosure. The method further includes step 407, step 408, step 409, and step 410, as detailed hereinafter.

In **step 407,** the first node sends a third sensing instruction to the second node.

In an example, the third sensing instruction carries at least the object feature of the target object.

When the target object moves, the first node may determine the second node for the sensing service based on a movement situation of the target object, and then send the third sensing instruction to the second node.

In some embodiments, the third sensing instruction further carries at least one of: the sensing type for the target object, the first network element information of the first network element, or the second network element information of the second network element for receiving the sensing data of the target object. For example, the third sensing instruction carries: the object feature of the target object, the sensing type for the target object, the first network element information, and the network element information corresponding to the sensing data acquisition network element.

In **step 408,** the second node performs wireless signal measurement with the target object.

In response to the third sensing instruction, the first node initiates wireless signal measurement to perform sensing operations.

In **step 409,** the second node identifies the target object.

In an example, the target object is identified based on the wireless signal measurement result.

In **step 410,** the second node acquires the sensing data of the target object.

Subsequent to acquiring the wireless signal measurement result, the second node may identify the target object based on the result and obtain the sensing data of the target object.

In some embodiments, taking the first network element being an SF as an example, the SF may acquire the sensing data of the target object by: receiving the sensing data of the target object from the first node, acquiring the sensing data of the target object from the second node, or acquiring the sensing data of the target object from the sensing data acquisition network element.

In some embodiments, the SF may also acquire the movement information of the target object, such as the information of the new area where the target object is located, and a new object feature of the target object. For example, the network data analytics function (NWDAF) acquires the sensing data from the sensing data acquisition network element, and analyzes the sensing data to derive the movement information of the target object. Subsequently, the SF acquires the movement information of the target object from the NWDAF. Based on this, the SF may determine a new sensing node or adjust the sensing instruction sent to the first node based on the sensing data and/or movement information.

In summary, in the sensing request method according to the embodiments, the first node is instructed, by the first sensing instruction, to identify the target object, thereby enabling sensing of the target object.

Some embodiments provide a method for switching sensing nodes. Once a second node (the node to switch to) is determined, the third sensing instruction is used to instruct the second node to identify the target object, thereby enabling sensing of the target object.

### 2. The first network element sends a second sensing instruction to the first node.

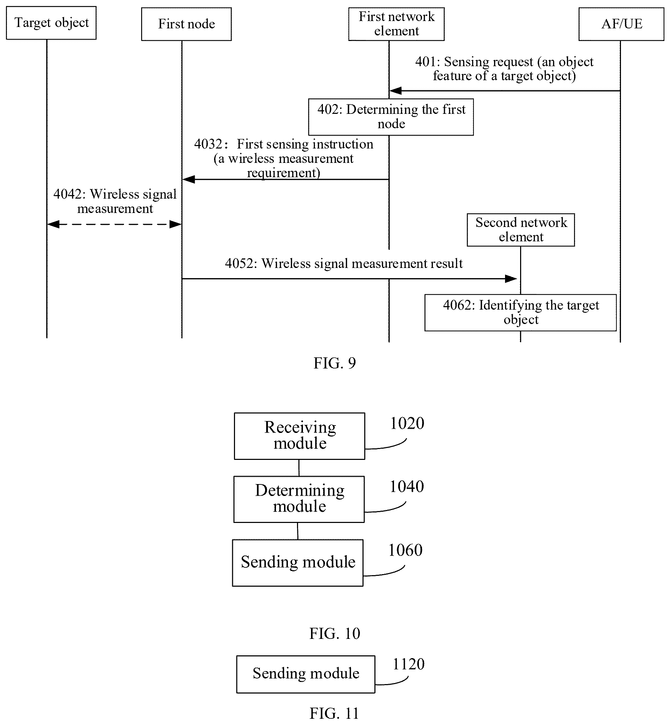

Referring to FIG. 6, FIG. 9 shows a flowchart of a sensing request method according to some embodiments of the present disclosure. In this method, step 403 may be implemented as step 4032, and includes step 402, step 4042, step 4052, and step 4062, as detailed hereinafter.

**In step 402,** the first network element determines a first node for the sensing service.

In some embodiments, the first node is determined based on a sensing request.

In some embodiments, the first network element may determine one or more sensing nodes (i.e., first nodes) based on the sensing request. In some embodiments, the first node includes one of: an access network device, a terminal, or a server for the sensing service. The access network device and the terminal may also be referred to as sensing devices. The server for the sensing service may also be referred to as a sensing application server. In some embodiments, the first node further includes traditional sensing devices, such as cameras.

In some embodiments, the first network element determines the first node based on the area where the target object is currently located, information of the UE near the target object, or the capabilities of sensing nodes in the area.

In **step 4032,** the first network element sends a second sensing instruction to the first node.

In some embodiments, the second sensing instruction carries at least a wireless measurement requirement. The second sensing instruction is used to instruct the first node to perform wireless signal measurement with the target object.

In **step 4042,** the first node performs wireless signal measurement with the target object.

In response to the second sensing instruction, the first node may initiate wireless signal measurement to perform sensing operations.

In **step 4052,** the first node sends a wireless signal measurement result to the second network element.

Subsequent to performing the wireless signal measurement, the first node sends a measurement result to the second network element to facilitate the identification of the target object by the second network element.

In **step 4062,** the second network element identifies the target object.

In some embodiments, the second network element is configured to acquire sensing data.

The second network element may be implemented as the first network element or as a network element in the core network other than the first network element, such as a sensing data acquisition network element. In some embodiments, the sensing data includes sensing measurement data and/or a sensing result. The sensing measurement data may be wireless signal measurement quantities. The sensing result may be information generated by calculation and/or analysis.

In a case where the second network element is implemented as the first network element, upon acquiring the wireless signal measurement result, the first network element may derive the sensing data of the target object based on the analysis of the wireless signal measurement result.

In some embodiments, the sensing data includes at least one of: sensing measurement data, or a sensing result.

Similar to the above embodiments, taking the first network element being an SF as an example, the SF may acquire the sensing data of the target object. In some embodiments, the SF may also acquire movement information of the target object. Based on this, the SF may determine a new sensing node, or adjust, based on the sensing data and/or movement information, the sensing instruction sent to the first node.

In summary, in the sensing request method according to the embodiments of the present disclosure, the first node is instructed, by the second sensing instruction, to perform wireless signal measurement with the target object. The first node then feeds back the wireless signal measurement result to the second network element, which enables the second network element to perform sensing on the target object.

Apparatus embodiments of the present disclosure are described hereinafter. For details not described in detail in the apparatus embodiments, reference may be made to the corresponding descriptions in the method embodiments, which are not elaborated herein.

FIG. 10 shows a schematic diagram of a sensing request apparatus according to some embodiments of the present disclosure. The apparatus includes a receiving module 1020, configured to receive a sensing request, wherein the sensing request carries at least an object feature of a target object, and the sensing request is used to request sensing of the target object.

In some embodiments, the object feature is used to describe a physical characteristic and/or a movement characteristic of the target object.

In some embodiments, the sensing request further carries at least one of: location information of the target object; terminal information associated with the target object; access network device information associated with the target object; or a sensing type for the target object.

In some embodiments, the sensing request apparatus is configured in an independent network element in a core network; or the sensing request apparatus is configured in any one of: an NEF, an SMF, or an AMF in the core network.

In some embodiments, the sensing request is sent by a terminal or an AF; or the sensing request is sent by the terminal or the AF via another network element.

In some embodiments, the apparatus further includes a determining module 1040, configured to determine a first node for the sensing service, wherein the first node is determined based on the sensing request.

In some embodiments, the first node includes one of: an access network device, a terminal, or a server for the sensing service.

In some embodiments, the apparatus further includes a sending module 1060 configured to send a first sensing instruction to a first node for the sensing service, wherein the first sensing instruction carries at least the object feature of the target object.

In some embodiments, the first sensing instruction further carries a sensing type for the target object.

In some embodiments, the receiving module 1020 is further configured to receive sensing data of the target object sent by the first node.

In some embodiments, the apparatus further includes a sending module 1060 configured to send a second sensing instruction to a first node for the sensing service, wherein the second sensing instruction carries a wireless measurement requirement.

In some embodiments, the receiving module 1020 is further configured to receive a wireless signal measurement result from the first node; and identify the target object based on the wireless signal measurement result.

In some embodiments, the apparatus further includes a determining module 1040, configured to determine sensing data of the target object based on the wireless signal measurement result.

In some embodiments, the sensing data includes at least one of: sensing measurement data; or a sensing result.

In some embodiments, the apparatus further includes a determining module 1040 configured to determine a new first node based on sensing data or movement information of the target object; or adjust, based on the sensing data or movement information of the target object, a sensing instruction sent to a first node.

FIG. 11 shows a schematic diagram of a sensing request apparatus according to some embodiments of the present disclosure. The apparatus includes: a sending module 1120 configured to send a sensing request, wherein the sensing request is at least used to describe a target object, and the sensing request is used to request sensing of the target object.

In some embodiments, the sending module 1120 is configured to send the sensing request to a first network element for a sensing service; or send the sensing request to the first network element via a network element other than the first network element.

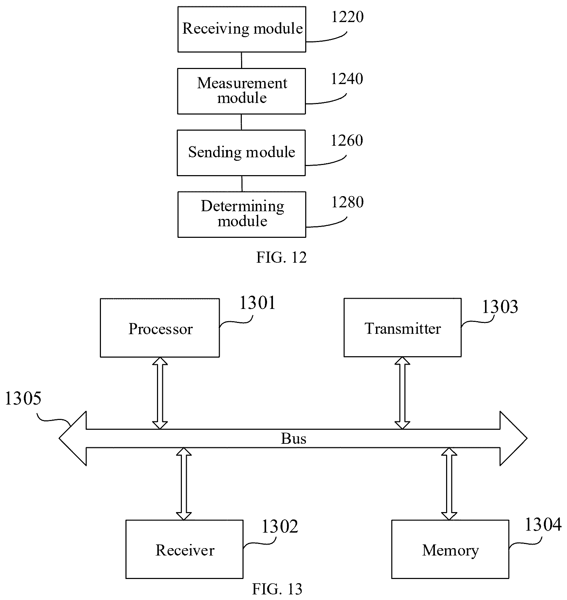

FIG. 12 shows a schematic diagram of a sensing request apparatus according to some embodiments of the present disclosure. The apparatus includes a receiving module 1220, configured to receive a sensing instruction, wherein the sensing instruction is sent by a first network element for a sensing service in response to a sensing request, and the sensing request is used to request sensing of a target object.

In some embodiments, the sensing instruction includes one of: a first sensing instruction for instructing the sensing request apparatus to sense the target object; or a second sensing instruction for instructing the sensing request apparatus to perform wireless signal measurement with the target object.

In some embodiments, the apparatus further includes a measurement module 1240, configured to perform wireless signal measurement with the target object.

In some embodiments, the apparatus further includes a sending module 1260, configured to send sensing data of the target object to a second network element.

In some embodiments, the sensing data includes at least one of: sensing measurement data; or a sensing result.

In some embodiments, the apparatus further includes a sending module 1260 configured to send a third sensing instruction to a second node for the sensing service, wherein the third sensing instruction carries at least an object feature of the target object.

In some embodiments, the third sensing instruction further carries at least one of: a sensing type for the target object; first network element information of the first network element; or second network element information of a second network element for receiving sensing data of the target object.

In some embodiments, the apparatus further includes a determining module 1280, configured to determine the second node, wherein the second node is determined based on a movement situation of the target object.

In some embodiments, the apparatus further includes a sending module 1260, configured to send a wireless signal measurement result to a second network element, wherein the wireless signal measurement result is used for the second network element to identify the target object.

In some embodiments, the second network element includes one of: the first network element; or a network element in a core network other than the first network element.

FIG. 13 shows a schematic structural diagram of a communication device (terminal or network device) according to some embodiments of the present disclosure. The communication device includes: a processor 1301, a receiver 1302, a transmitter 1303, a memory 1304, and a bus 1305.

The processor 1301 includes one or more processing cores, and the processor 1301 executes various functional applications and information processing by running software programs and modules.

The receiver 1302 and the transmitter 1303 may be implemented as a communication component, which may be a communication chip.

The memory 1304 is connected to the processor 1301 via the bus 1305.

The memory 1304 may be configured to store at least one instruction, and the processor 1301 is configured to execute the at least one instruction to implement each step of the sensing request method mentioned in the above method embodiments.

In addition, the memory 1304 may be implemented by any type of volatile or non-volatile storage device or a combination thereof. The volatile or non-volatile storage devices include, but are not limited to: magnetic disks or optical disks, electrically-erasable programmable read-only memory (EEPROM), erasable programmable read-only memory (EPROM), static random-access memory (SRAM), read-only memory (ROM), magnetic memory, flash memory, and programmable read-only memory (PROM).

Some embodiments of the present disclosure further provide a first network element for a sensing service, which is configured to perform the above-mentioned sensing request method.

Some embodiments of the present disclosure further provide a terminal, which is configured to perform the above-mentioned sensing request method.

Some embodiments of the present disclosure further provide an AF, which is configured to perform the above-mentioned sensing request method.

Some embodiments of the present disclosure further provide a first node for a sensing service, which is configured to perform the above-mentioned sensing request method.

Some embodiments of the present disclosure further provide a computer-readable storage medium storing a computer program, where the computer program is executed by a processor to perform the above-mentioned sensing request method.

Some embodiments of the present disclosure further provide a chip including a programmable logic circuit and/or a program instruction. When the chip operates, it is configured to perform the above-mentioned sensing request method.

Some embodiments of the present disclosure further provide a computer program product or computer program. The computer program product or computer program includes computer instructions stored in a computer-readable storage medium. The processor reads the computer instructions from the computer-readable storage medium and executes the computer instructions to perform the above-mentioned sensing request method.

The above describes only optional embodiments of the present disclosure, which are not used to limit the present disclosure. Any modifications, equivalent replacements, improvements, etc. made within the spirit and principles of the present disclosure shall be included in the protection scope of the present disclosure.

## Claims

1. A sensing request method, performed by a first network element for a sensing service, the method comprising:
receiving a sensing request, wherein the sensing request carries at least an object feature of a target object, and the sensing request is used to request to sense the target object.

2. The method according to claim 1, wherein
the object feature is used to describe a physical characteristic and/or a movement characteristic of the target object.

3. The method according to claim 1 or 2, wherein the object feature comprises at least one of:
a size of the target object;
a shape of the target object;
a color of the target object;
a temperature of the target object;
a material of the target object;
a volume of the target object;
a weight of the target object;
a form of the target object;
a trajectory of movement of the target object;
a speed of movement of the target object;
an interval of speed of movement of the target object;
a state of movement of the target object;
a start position of movement of the target object; or
an end position of movement of the target object.

4. The method according to any one of claims 1 to 3, wherein the sensing request further carries at least one of:
location information of the target object;
terminal information associated with the target object;
access network device information associated with the target object; or
a sensing type for the target object.

5. The method according to claim 4, wherein the location information of the target object comprises at least one of:
a geographical location of the target object;
information of an area corresponding to the target object; or
information of a direction corresponding to the target object.

6. The method according to any one of claims 1 to 5, wherein
the first network element is an independent network element in a core network; or
the first network element is any one of: a network exposure function, NEF, a session management function, SMF, or an access and mobility management function, AMF, in the core network.

7. The method according to any one of claims 1 to 6, wherein
the sensing request is sent by a terminal or an application function, AF; or
the sensing request is sent by the terminal or the AF via another network element.

8. The method according to any one of claims 1 to 7, further comprising:
determining a first node for the sensing service,
wherein the first node is determined based on the sensing request.

9. The method according to claim 8, wherein
the first node comprises one of: an access network device, a terminal, or a server for the sensing service.

10. The method according to any one of claims 1 to 9, further comprising:
sending a first sensing instruction to a first node for the sensing service,
wherein the first sensing instruction carries at least the object feature of the target object.

11. The method according to claim 10, wherein
the first sensing instruction further carries a sensing type for the target object.

12. The method according to claim 10, further comprising:
receiving sensing data of the target object from the first node.

13. The method according to any one of claims 1 to 9, further comprising:
sending a second sensing instruction to a first node for the sensing service,
wherein the second sensing instruction carries a wireless measurement requirement.

14. The method according to claim 13, further comprising:
receiving a wireless signal measurement result from the first node; and
identifying the target object based on the wireless signal measurement result.

15. The method according to claim 14, further comprising:
determining sensing data of the target object based on the wireless signal measurement result.

16. The method according to claim 12 or 15, wherein the sensing data comprises at least one of:
sensing measurement data; or
a sensing result.

17. The method according to any one of claims 1 to 16, further comprising:
determining a new first node based on sensing data or movement information of the target object; or
adjusting a sensing instruction sent to a first node based on the sensing data or movement information of the target object.

18. A sensing request method, performed by a terminal or an application function, AF, the method comprising:
sending a sensing request,
wherein the sensing request is at least used to describe a target object, and the sensing request is used to request sensing of the target object.

19. The method according to claim 18, wherein sending the sensing request comprises:
sending the sensing request to a first network element for a sensing service; or
sending the sensing request to the first network element via a network element other than the first network element.

20. A sensing request method, performed by a first node for a sensing service, the method comprising:
receiving a sensing instruction,
wherein the sensing instruction is sent by a first network element for the sensing service in response to a sensing request, and the sensing request is used to request sensing of a target object.

21. The method according to claim 20, wherein the sensing instruction comprises one of:
a first sensing instruction for instructing the first node to sense the target object; or
a second sensing instruction for instructing the first node to perform wireless signal measurement with the target object.

22. The method according to claim 20 or 21, further comprising:
performing wireless signal measurement with the target object.

23. The method according to claim 20 or 21, further comprising:
sending sensing data of the target object to a second network element.

24. The method according to claim 23, wherein the sensing data comprises at least one of:
sensing measurement data; or
a sensing result.

25. The method according to any one of claims 20 to 23, further comprising:
sending a third sensing instruction to a second node for the sensing service,
wherein the third sensing instruction carries at least an object feature of the target object.

26. The method according to claim 25, wherein the third sensing instruction further carries at least one of:
a sensing type for the target object;
first network element information of the first network element; or
second network element information of a second network element for receiving sensing data of the target object.

27. The method according to claim 25, further comprising:
determining the second node,
wherein the second node is determined based on a movement situation of the target object.

28. The method according to claim 20 or 21, further comprising:
sending a wireless signal measurement result to a second network element,
wherein the wireless signal measurement result is used for the second network element to identify the target object.

29. The method according to any one of claims 23 to 28, wherein the second network element comprises one of:
the first network element; or
a network element in a core network other than the first network element.

30. A sensing request apparatus, comprising:
a receiving module, configured to receive a sensing request,
wherein the sensing request carries at least an object feature of a target object, and the sensing request is used to request sensing of the target object.

31. The apparatus according to claim 30, wherein
the object feature is used to describe a physical characteristic and/or a movement characteristic of the target object.

32. The apparatus according to claim 30 or 31, wherein the sensing request further carries at least one of:
location information of the target object;
terminal information associated with the target object;
access network device information associated with the target object; or
a sensing type for the target object.

33. The apparatus according to any one of claims 30 to 32, wherein
the sensing request apparatus is disposed in an independent network element in a core network; or
the sensing request apparatus is disposed in any one of: a network exposure function, NEF, a session management function, SMF, or an access and mobility management function, AMF, in the core network.

34. The apparatus according to any one of claims 30 to 33, wherein
the sensing request is sent by a terminal or an application function, AF; or
the sensing request is sent by the terminal or the AF via another network element.

35. The apparatus according to any one of claims 30 to 34, further comprising:
a determining module, configured to determine a first node for the sensing service,
wherein the first node is determined based on the sensing request.

36. The apparatus according to claim 35, wherein
the first node comprises one of: an access network device, a terminal, or a server for the sensing service.

37. The apparatus according to any one of claims 30 to 36, further comprising:
a sending module, configured to send a first sensing instruction to a first node for the sensing service,
wherein the first sensing instruction carries at least the object feature of the target object.

38. The apparatus according to claim 37, wherein
the first sensing instruction further carries a sensing type for the target object.

39. The apparatus according to claim 37, wherein
the receiving module is further configured to receive sensing data of the target object from the first node.

40. The apparatus according to any one of claims 30 to 39, further comprising:
a sending module, configured to send a second sensing instruction to a first node for the sensing service,
wherein the second sensing instruction carries a wireless measurement requirement.

41. The apparatus according to claim 40, wherein
the receiving module is further configured to receive a wireless signal measurement result from the first node; and to identify the target object based on the wireless signal measurement result.

42. The apparatus according to claim 41, further comprising:
a determining module, configured to determine sensing data of the target object based on the wireless signal measurement result.

43. The apparatus according to claim 42, wherein the sensing data comprises at least one of:
sensing measurement data; or
a sensing result.

44. The apparatus according to any one of claims 40 to 43, further comprising:
a determining module, configured to determine a new first node based on sensing data or movement information of the target object; or to adjust a sensing instruction sent to a first node based on the sensing data or movement information of the target object.

45. A sensing request apparatus, comprising:
a sending module, configured to send a sensing request,
wherein the sensing request is at least used to describe a target object, and the sensing request is used to request sensing of the target object.

46. The apparatus according to claim 45, wherein
the sending module is configured to send the sensing request to a first network element for a sensing service; or to send the sensing request to the first network element via a network element other than the first network element.

47. A sensing request apparatus, comprising:
a receiving module, configured to receive a sensing instruction,
wherein the sensing instruction is sent by a first network element for a sensing service in response to a sensing request, and the sensing request is used to request sensing of a target object.

48. The apparatus according to claim 47, the sensing instruction comprises one of:
a first sensing instruction for instructing the sensing request apparatus to sense the target object; or
a second sensing instruction for instructing the sensing request apparatus to perform wireless signal measurement with the target object.

49. The apparatus according to claim 47 or 48, further comprising:
a measurement module, configured to perform wireless signal measurement with the target object.

50. The apparatus according to claim 47 or 48, further comprising:
a sending module, configured to send sensing data of the target object to a second network element.

51. The apparatus according to claim 50, wherein the sensing data comprises at least one of:
sensing measurement data; or
a sensing result.

52. The apparatus according to any one of claims 47 to 51, further comprising:
a sending module, configured to send a third sensing instruction to a second node for the sensing service,
wherein the third sensing instruction carries at least an object feature of the target object.

53. The apparatus according to claim 52, wherein the third sensing instruction further carries at least one of:
a sensing type for the target object;
first network element information of the first network element; or
second network element information of a second network element for receiving sensing data of the target object.

54. The apparatus according to claim 53, further comprising:
a determining module, configured to determine the second node,
wherein the second node is determined based on a movement situation of the target object.

55. The apparatus according to claim 47 or 48, further comprising:
a sending module, configured to send a wireless signal measurement result to a second network element,
wherein the wireless signal measurement result is used for the second network element to identify the target object.

56. The apparatus according to any one of claims 50 to 55, wherein the second network element comprises one of:
the first network element; or
a network element in a core network other than the first network element.

57. A first network element for a sensing service, wherein the first network element is configured to implement the sensing request method as defined in any one of claims 1 to 17.

58. A terminal, wherein the terminal is configured to implement the sensing request method as defined in claim 18 or 19.

59. An application function, AF, wherein the AF is configured to implement the sensing request method as defined in claim 18 or 19.

60. A first node for a sensing service, wherein the first node is configured to implement the sensing request method as defined in any one of claims 20 to 29.

61. A computer-readable storage medium, storing one or more computer programs, wherein the one or more computer programs, when loaded and run by a processor, causes the processor to perform the sensing request method as defined in any one of claims 1 to 29.

62. A chip, comprising: a programmable logic circuit and/or a program instruction, wherein when an electronic device equipped with the chip operates, the electronic device is configured to perform the sensing request method as defined in any one of claims 1 to 29.

63. A computer program product, comprising: one or more computer instructions stored in a computer-readable storage medium, wherein the one or more computer instructions, when read by a processor from the computer-readable storage medium and executed, cause the processor to perform the sensing request method as defined in any one of claims 1 to 29.
